Europäisches Patentamt

European Patent Office

Office européen des brevets

(11) Publication number: **0 459 704 A1**

# (12) EUROPEAN PATENT APPLICATION

(21) Application number: **91304678.5**

(22) Date of filing: **23.05.91**

(51) Int. Cl.⁵: **B64C 1/14, B32B 17/10**

(30) Priority: **26.05.90 GB 9011855**

(43) Date of publication of application:
**04.12.91 Bulletin 91/49**

(84) Designated Contracting States:
**DE FR GB IT**

(71) Applicant: **TRIPLEX AIRCRAFT AND SPECIAL PRODUCTS LIMITED**
**Eckersall Road, Kings Norton**
**Birmingham B38 8SR (GB)**

(72) Inventor: **Hall, Christopher William Geoffrey**
**21 Barford Close Matchborough East**
**Redditch Worcestershire (GB)**

(74) Representative: **Jenkins, Peter David et al**
**PAGE, WHITE & FARRER 54 Doughty Street**
**London WC1N 2LS (GB)**

(54) **Aircraft windshield.**

(57) A bird impact resistant windshield for a pressurised aircraft comprises two plies (1,2) of toughened glass and an interlayer (3) comprising energy absorbing plastics (3',3") between the said two plies, the interlayer incorporating at least one reinforcing ply (6) to improve the performance of the windshield in the event of fracture of the said glass plies.

Fig.2.

EP 0 459 704 A1

The invention relates to aircraft windshields for pressurised aircraft, and in particular to laminated windshields, designed to withstand bird impact, incorporating at least two plies of toughened glass.

Such windshields are well known and comprise two or more structural plies of toughened glass laminated together by means of a thick thermoplastic interlayer. A thinner facing glass ply, toughened to a lesser degree, is usually laminated to the outer of the said toughened glass plies, again using a thermoplastic interlayer, to form the front face of the windshield. The lower degree of toughening is intended to provide adequate retained vision if this facing glass ply is fractured.

The windshields are designed so that the structural plies are not broken by bird impact. However, the windshields are required to "fail safe" so that, if the structural plies are shattered, the windshield is nevertheless required to contain the cabin pressurisation for a specified time dependent on the particular air safety regulations applying to the aircraft. To withstand this load, a thick interlayer of energy absorbing plastics material has previously been used between two structural glass plies.

While conventional interlayers consisting of energy absorbing plastics such as polyvinylbutyral and polyurethane may provide a satisfactory performance at low and normal ambient temperatures, their performance is reduced at elevated temperatures frequently encountered by the aircraft windshield in service. There is now a requirement for an improved windshield performance at elevated temperature.

We have found that the performance of the windshield after fracture of the structural glass plies may be improved, especially at elevated temperature, by introducing a thin ply of reinforcing plastics, such as acrylic or polycarbonate, into the interlayer. Moreover, the thickness of the interlayer material may be correspondingly reduced, so that the total thickness of the windshield may remain unchanged despite the incorporation of a reinforcing ply. Furthermore the stiffening of the interlayer by the introduction of a reinforcing ply improves the bird impact performance at elevated temperature.

According to the present invention, there is provided a bird impact resistant windshield for a pressurised aircraft the windshield comprising two plies of toughened glass and an interlayer of energy absorbing plastics material between the said two plies, the interlayer incorporating at least one reinforcing ply.

The energy absorbing plastics material will usually be polyurethane or polyvinylbutyral or a combination thereof, and will usually be thermoplastic.

The reinforcing ply may be an acrylic ply, which may be cross-linked, as cast or stretched. Other transparent rigid plastics i.e. plastics having a heat deflection temperature above 90°C (measured in accordance with ASTM 648), such as polycarbonate

or polyterephthalates, may also be used.

It will usually be convenient to use a single reinforcing ply although, in principle, two or more thinner reinforcing plies of equal total thickness may be used if desired. The interlayer will typically have a total thickness (including any reinforcing plies) in the range 4 to 6 mm, and the total thickness of the reinforcing ply or plies will usually be in the range 1 to 3.5 mm.

The invention is illustrated but not limited by the following description with reference to the accompanying diagrammatic drawings in which:

Figure 1 is a section through the edge of a prior art aircraft windshield.

Figures 2 and 3 are each sections through the edges of an aircraft windshield as shown in Figure 1 modified in accordance with the present invention.

Figure 4 is a section through the edge of a further aircraft windshield in accordance with the invention.

In the drawings, corresponding numbers are used for corresponding parts in different Figures.

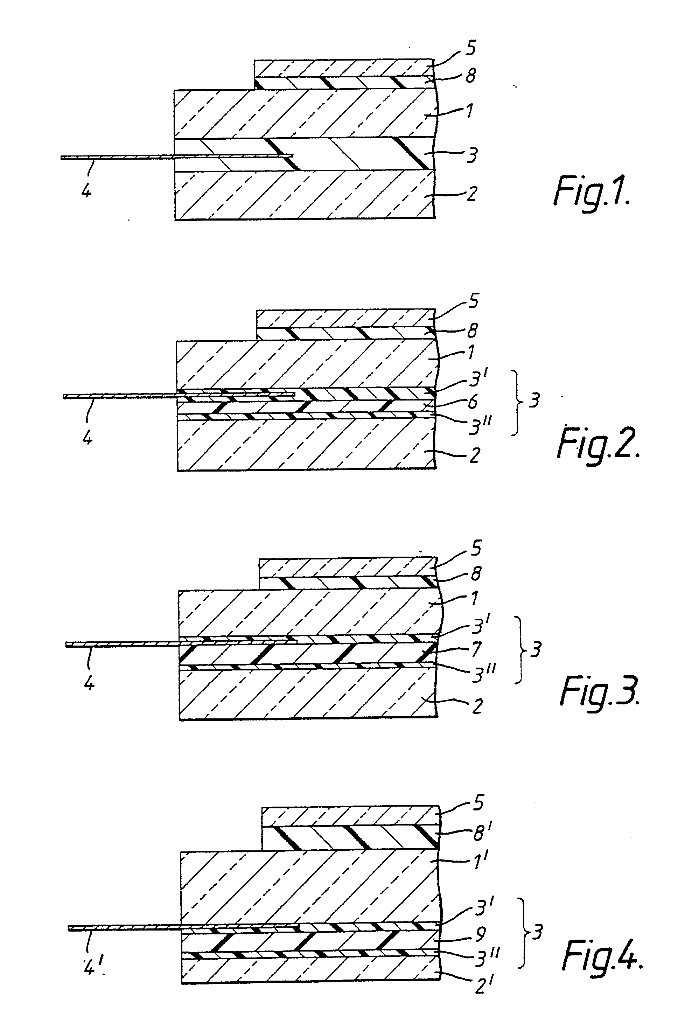

Referring to Figure 1 an aircraft windshield comprises two toughened glass plies 1 and 2, each typically having a thickness in the range 5 to 10 mm. The glass plies are spaced apart and bonded together by an interlayer 3 of energy absorbing plastics, such as polyvinylbutyral or polyurethane, typically having a thickness in the range 4 to 6 mm. A thinner facing glass ply 5, typically having a thickness in the range 2 to 5 mm, is laminated to the outer glass ply 1 by a thin interlayer 8 of polyvinylbutyral or polyurethane. The facing glass ply 5 is of smaller plan size than the structural glass plies 1 and 2 for fitting the windshield into the frame of the aircraft. It is toughened to a lesser extent than the structural plies in order to allow adequate vision if it is fractured and may carry an electroconductive heating film (not shown) on its inner surface adjacent the interlayer 8.

An insert 4 of high strength flexible material 4 is embedded at its inner edge in the interlayer 3 while its outer edge extends from the periphery of the interlayer for attachment to the aircraft. The insert may be of inorganic fibres and is preferably of glass fibre fabric. Such fabric inserts assist in maintaining the windshield in position in use, especially after fracture of the glass plies 1 and 2. They are more fully described in UK patent specification GB 1 406 441.

Figure 2 shows a version of the windshield of Figure 1 modified in accordance with the present invention. In this case the interlayer 3 comprises two separate parts, 3 and 3", separated by and bonded to a thin reinforcing ply 6. The reinforcing ply is preferably an acrylic ply or a polycarbonate ply, but if of polycarbonate, is most conveniently used in conjunction with a polyurethane interlayer since the plasticiser commonly used in polyvinylbutyral interlayer reacts adversely with polycarbonate. The total thickness of the interlayer, including the reinforcing ply, is unchanged from Figure 1, so that the windshield of Figure 2 may be glazed in the same aircraft without modification of the frame in the aircraft. The edge insert 4 has been displaced slightly toward the outer front face of the windshield to accommodate the reinforcing ply.

The aircraft windshield shown in Figure 3 is similar to that shown in Figure 2 except that the reinforcing ply 7 is thicker than reinforcing ply 6.

The windshield shown in Figure 4 is a modified version of the windshield shown in the earlier Figures in that the two structural glass plies are of unequal thickness, the thicker outer structural ply 1' being of thermally toughened glass and the thinner inner structural ply 2' being of chemically toughened glass.

By way of example, an aircraft windshield as shown in Figure 1, having a plan size of approximately 900 mm x 675 mm, was made up with two thermally toughened glass plies 1 and 2 each 8 mm thick laminated together with a polyvinylbutyral interlayer 5 mm thick. The outer rebate glass was 3 mm thick and was laminated to the outer glass ply 1 by a thinner polyvinylbutyral interlayer 8, 2 mm thick. The windshield was mounted at the aircraft installed angle in a representative frame. At ambient ground temperature the design withstood a centre shot by a 4 lb bird at 360 knots. When maintained at elevated temperature, with the mean temperature from the inner to the outer face of 46°C, a similar windshield failed under the same impact condition.

Similar windshields were then made up but modified in accordance with the invention with a 2 mm ply of cross linked acrylic (as cast) used in place of 2 mm of the polyvinylbutyral interlayer as shown in Figure 2. The outer interlayer part 3' was 2 mm thick, and the inner interlayer part 3" was 1 mm thick. One such modified windshield was impact tested as described above at ambient ground temperature, and a second was impact tested as described above at a mean temperature of 46°C, both passed. Subsequently, this modified windshield design was pressure tested with all the glass plies fractured at a uniform soak temperature of 30°C. The windshield withstood a pressurisation load of 75 kPa for half an hour, whereas the design of Figure 1, tested in a similar manner, failed after 15 minutes.

In a further variant of the invention as illustrated in Figure 3, 3 mm of the polyvinylbutyral interlayer was replaced by a 3 mm ply 7 of cross linked acrylic (as cast) arranged so that the outer interlayer part 3' was 1.4 mm thick, and the inner interlayer part 3" was 0.6 mm thick. This variant passed the bird impact test described above under both the ambient ground and elevated temperature conditions and, with all the glass plies fractured, and at a uniform soak temperature of 30°C, withstood a pressurisation load of 75 kPA for 6 hours.

The above examples illustrate the effectiveness of a reinforcing ply in improving the fail safe performance of the window i.e. the ability to maintain cabin pressure with all the glass panes fractured. They also show an improvement impact performance at elevated temperature.

In a further variant of the invention, in accordance with Figure 4, an aircraft windshield, again having a plan size of approximately 900 mm x 600 mm, was made up with an outer structural glass ply 1' of thermally toughened glass 12 mm thick and an inner structural glass ply 2' of chemically toughened glass 4 mm thick. An interlayer 3 between the said plies comprised an outer part 3' of polyvinylbutyral and an inner part 3" of thermoplastic polyurethane (the polyurethane used was PE 192, available in commerce from Morton Thiokol Inc of Chicago, USA). Each of the parts 3' and 3" was 1.25 mm thick. The interlayer further comprised a 3 mm thick reinforcing ply of stretched acrylic 9 (in accordance with MIL-P-25690A and available in commerce from Swedlow Inc of Los Angeles, USA), to give a total interlayer thickness of 5.5 mm.

A front ply of thermally toughened glass 5, having a thickness of 3 mm and being less highly toughened than outer glass ply 1' was bonded to the outer face of outer glass ply 1' by a layer 8' of polyvinylbutyral approximately 4.5 mm thick.

The windshield was mounted at the aircraft installed angle in a representative frame, with an inner surface temperature of +38°C and an outer surface temperature of +54°C, and subject to a centre shot by a 4 lb bird at 373.5 knots. The windshield withstood the impact with no visible damage. A similar windshield was then tested with a corner impact of a 4 lb bird at 378 knots with the windshield having an inner surface temperature of 1.7°C and an outer surface temperature of -37°C. The 3 mm front ply and 4 mm chemically toughened inner ply (5 and 2 in Figure 4) both fractured, but the thermally toughened outer ply (1' in Figure 4) did not. Moreover examination of the chemically toughened ply showed the initial failure did not occur at the impact site, but at a small surface defect 30 cm from the impact site. In the absence of the defect, none of the plies may have broken. Even with two plies shattered, the windshield was judged to have passed the test as the outer structural glass ply 1' did not break.

While, in the specific tests described above, a single as cast or stretched acrylic ply was used, it will be appreciated that two or even more reinforcing plies may be used, and the reinforcing ply or plies may be of other rigid plastics, for example polycarbonate (with an appropriate interlayer material). An important advantage of the invention is that it allows an existing windshield design to be modified without change of its overall thickness or any of the components other than the interlayer material between two structural glass plies; it will be appreciated, however, that other parameters, for example, the thickness of the interlayer or the glass plies, may also be varied if desired.

The present invention is especially applicable to windscreens for pressurised aircraft, which windscreens generally have a substantial glass thickness to withstand the pressure differential between the interior of the aircraft and the external atmosphere. Thus the two main plies of toughened glass which sandwich the interlayer incorporating the reinforcing ply between them will generally have a combined thickness (excluding the thickness of the interlayer) in the range 12 mm to 20 mm.

## Claims

1. A bird impact resistant windshield for a pressurised aircraft the windshield comprising two plies of toughened glass (1,2,1',2') and an interlayer (3) comprising energy absorbing plastics between the said two plies, the interlayer incorporating at least one reinforcing ply (6,7,9).

2. A windshield according to claim 1 in which the energy absorbing plastics is thermoplastic.

3. A windshield according to claim 2 in which the thermoplastic energy absorbing plastics is polyurethane or polyvinylbutyral.

4. A windshield according to any of the preceding claims in which the interlayer (3) incorporates an acrylic reinforcing ply (6,7,9).

5. A windshield according to any of claims 1 to 3 in which the interlayer (3) incorporates a polycarbonate reinforcing ply (6,7,9).

6. A windshield according to any of the preceding claims in which the interlayer (3) incorporates one or more reinforcing plies (6,7,9) having a total thickness in the range 1 to 3.5 mm.

7. A windshield according to any of the preceding claims in which the interlayer (3) including any plies (6,7,9) of reinforcing material has a thickness in the range 4 to 6 mm.

8. A windshield according to any of the preceding claims in which the interlayer (3) incorporates an insert (4) of high strength flexible material which extends from the periphery of the interlayer for attachment to the aircraft.

9. A windshield according to claim 8 in which the insert is of inorganic fibres.

10. A windshield according to claim 9 in which the insert is of glass fibre fabric.

11. A windshield according to any of the preceding claims in which the said two glass plies (1,2) are thermally toughened and each has a thickness in the range 5 to 10 mm.

12. A windshield according to any of the preceding claims in which the outer (1') of the said two plies of toughened glass is of thermally toughened glass and the inner (2') of the said two plies of toughened glass is of chemically toughened glass.

13. A windshield according to claim 12 in which the outer (1') of the said two plies of toughened glass is thicker than the inner.

14. A windshield according to claim 13 in which the outer (1') of the said two glass plies has a thickness of about 12 mm.

15. A windshield according to claim 13 or 14 in which the inner (2') of the said two glass plies has a thickness of about 4 mm.

16. A windshield according to any of the preceding claims which additionally comprises a thin glass ply (5) laminated to the outer (1,1') of the said two plies of toughened glass to form the front ply of the windshield.

17. A windshield according to claim 16 in which the thin glass ply (5) has a thickness in the range 2 to 5 mm.

Fig.1.

Fig.2.

Fig.3.

Fig.4.

EP 0 459 704 A1

European Patent Office

**EUROPEAN SEARCH REPORT**

Application Number

EP 91 30 4678
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-1317551 (CORNING GLASS WORKS)<br>* page 1, left-hand column, line 9 - page 1, left-hand column, line 18 *<br>* page 1, right-hand column, line 4 - page 1, right-hand column, line 17 *<br>* page 2, left-hand column, line 37 - page 2, left-hand column, line 47 *<br>* page 2, right-hand column, line 16 - page 2, right-hand column, line 34 * | 1, 2 | B64C1/14<br>B32B17/10 |
| A | | 8 | |
| Y | US-A-3406086 (FOSTER)<br>* column 5, line 35 - column 5, line 45 *<br>* column 6, line 23 - column 6, line 37; figure 1 * | 1, 2 | |
| A | | 3, 5 | |
| A | FR-A-1390046 (FARBENFABRIKEN BAYER)<br>* page 2, right-hand column, line 8 - page 2, right-hand column, line 38 *<br>* page 3, left-hand column, line 25 - page 3, left-hand column, line 29 *<br>* page 3, right-hand column, line 33 - page 3, right-hand column, line 37 *<br>* page 3, right-hand column, line 41 - page 3, right-hand column, line 44 *<br>* page 3, right-hand column, line 59 - page 4, left-hand column, line 6 * | 1-3, 5, 6 | |
| A | US-A-3666614 (SNEDEKER)<br>* column 1, line 71 - column 2, line 9 *<br>* column 4, line 41 - column 4, line 46 *<br>* column 4, line 72 - column 4, line 75 *<br>* column 7, line 11 - column 7, line 13 *<br>* column 7, line 40 - column 7, line 43 *<br>* column 12, line 67 - column 12, line 75; figure 2 * | 1-3, 5, 11 | **TECHNICAL FIELDS SEARCHED (Int. Cl.5 )**<br><br>B64C<br>B32B |
| A | FR-A-2632950 (GLAVERBEL)<br>* page 11, line 2 - page 11, line 23; figure 2 * | 1-3, 5, 12, 13 | |

The present search report has been drawn up for all claims

| Place of search | Date of completion of the search | Examiner |
|---|---|---|
| THE HAGUE | 04 SEPTEMBER 1991 | ZERI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

6

**European Patent Office**

## EUROPEAN SEARCH REPORT

Application Number

EP 91 30 4678
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | --- | | |
| D,A | GB-A-1406441 (TRIPLEX SAFETY GLASS COMP.) <br> * page 4, line 7 - page 4, line 65; figure 1 * | 1, 8-10, 16 | |
| | ----- | | |

TECHNICAL FIELDS SEARCHED (Int. Cl.5)

The present search report has been drawn up for all claims

| Place of search | Date of completion of the search | Examiner |
|---|---|---|
| THE HAGUE | 04 SEPTEMBER 1991 | ZERI A. |

EPO FORM 1503 03.82 (P0401)